Europäisches Patentamt

European Patent Office

Office européen des brevets

(11) Veröffentlichungsnummer : **0 012 233**
**B1**

(12) ## EUROPÄISCHE PATENTSCHRIFT

(45) Veröffentlichungstag der Patentschrift :
**21.10.81**

(21) Anmeldenummer : **79104528.9**

(22) Anmeldetag : **16.11.79**

(51) Int. Cl.³ : **B 23 Q   3/06**, B 23 B 51/04,
B 23 B 45/14, B 26 F   1/16

(54) **Werkzeug zum Lochen von Fliesen oder dgl.**

(30) Priorität : **15.12.78 DE 7837193 U**

(43) Veröffentlichungstag der Anmeldung :
**25.06.80 (Patentblatt 80/13)**

(45) Bekanntmachung des Hinweises auf die Patenterteilung : **21.10.81 Patentblatt 81/42**

(84) Benannte Vertragsstaaten :
**AT BE FR IT NL**

(56) Entgegenhaltungen :
**DE - A - 2 545 197
CH - A - 456 431
FR - A - 2 265 484
GB - A - 228 653
US - A - 1 496 171
US - A - 2 899 991**

(73) Patentinhaber : **Jöcker, Eduard
Zum Tal 56
D-5600 Wuppertal 12 (DE)**

(72) Erfinder : **Jöcker, Eduard
Zum Tal 56
D-5600 Wuppertal 12 (DE)**

(74) Vertreter : **Peerbooms, Rudolf, Dipl.-Phys.
Postfach 200 208 Dickmannstrasse 45C
D-5600 Wuppertal 2 (DE)**

Imprimerie Jouve, 17, rue du Louvre, 75001 Paris, France

EP 0 012 233 B1

Werkzeug zum Lochen von Fliesen oder dgl.

Die Neuerung betrifft ein Werkzeug zum Lochen von Fliesen oder dgl..

Beim Verlegen von Fliesen, insbesondere beim Kacheln von Badezimmern oder Küchen, sind im Hinblick auf die aus der Wand heraustretenden Wasser-, Gas- und Elektroanschlüsse usw. meist eine Anzahl von Fliesen mit Durchtrittslöchern zu versehen, die im Hinblick auf ein gutes Erscheinungsbild in ihrer Lochweite möglichst eng dem Außendurchmesser der jeweiligen Anschlüsse anzupassen sind. Das Lochen von Fliesen ist aber bei Verwendung der bisher bekannten Hilfsmittel äußerst zeitraubend und umständlich, zumal häufig die Fliesen hierbei brechen. Durch die DE-OS 25 03 484 ist ein von Hand zu betätigendes Gerät zum Lochen von Fliesen bekannt, das eine genaue Anpassung des Lochdurchmessers und eine genaue Ausrichtung des Lochzentrums auf die jeweiligen geometrischen Verhältnisse der hindurchzuführenden örtlichen Anschlußleitungen ermöglicht.

Der Neuerung liegt die Aufgabe zugrunde, ein preiswertes, maschinell antreibbares Werkzeug zum Lochen von Fliesen zu schaffen.

Die Lösung dieser Aufgabe wird neuerungsgemäß durch einen im Bohrfutter einer elektrischen Handbohrmaschine einspannbaren Schneidwerkzeugträger mit Zentrierspitze und durch eine am Fuß eines Heimwerkerbohrständers festspannbare Grundplatte mit einer durch Abstandhalter distanzierten Fliesenauflageplatte und mit einem über die Auflageplatte sich erstreckenden Fliesenfestspannbügel erreicht.

Eine elektrische Handbohrmaschine mit dazugehörigem Bohrständer, an dem die Bohrmaschine eingespannt werden kann, gehört schon zur Standardausrüstung eines Handwerkers, so auch eines Fliesenlegers. Der von der Bohrmaschine angetriebene Schneidwerkzeugträger ist mit Schneidstählen bestückt, die stufenlos verstellt und dadurch jeder gewünschten Lochweite angepaßt werden können. Die mit dem Loch zu versehende Fliese wird zwischen Fliesenauflageplatte und Fliesenfestspannbügel eingeklemmt und nimmt gegenüber dem Schneidwerkzeug eine unverschiebbare Lage ein, da die Fliesenauflageplatte über die Grundplatte mit dem Fuß des Bohrständers fest verbunden ist.

In Ausgestaltung der Neuerung kann vorgesehen sein, daß die Grundplatte rechteckig ausgebildet ist, wobei sie den Fuß des Bohrständers seitlich überragt, daß nahe den seitlichen Grundplattenrändern je eine Schraube von der Grundplatte nach oben abragt, daß sich die Schrauben durch die Fliesenauflageplatte hindurcherstrecken, wobei zwischen Grundplatte und Fliesenauflageplatte zylindrische, von den Schrauben durchsetzte Distanzstücke vorgesehen sind, daß der Festspannbügel in den Randbereichen seiner Schmalseiten Durchgangslöcher für die Schrauben aufweist, und daß zwischen Fliesenauflageplatte und Festspannbügel die Schrauben umschließende Schraubendruckfedern vorgesehen sind.

Diese Anordnung von Grundplatte, Fliesenauflageplatte und Fliesenfestspannbügel erbringt einen festen Zusammenhalt unter Verwendung nur weniger Einzelteile. Die Schraubenfedern zwischen Fliesenfestspannbügel und Fliesenauflageplatte sichern ein bequemes Ein- und Ausbringen der Fliese in den Halterungsteil des Werkzeuges. Die Distanzstücke zwischen Grundplatte und Fliesenauflageplatte ermöglichen zum einen ein bequemes Anbringen der Flieseneinspannvorrichtung an dem Bohrständer ; zum anderen verhindern sie eine Beschädigung des Schneidwerkzeugs nach dessen Durchgang durch die Fliese. Das aus der Fliese geschnittene kreisrunde Fliesenstück kann leicht aus dem Raum zwischen Grundplatte und Fliesenauflageplatte entfernt werden.

Gemäß einer weiteren Ausgestaltung der Neuerung kann vorgesehen sein, daß die Fliesenauflageplatte an der Oberseite und der Fliesenfestspannbügel an der Unterseite mit einer elastischen Auflage, beispielsweise aus geripptem Gummi, versehen sind. Durch diese Auflagen wird die Fliese ohne Gefahr einer Beschädigung fest und unverrückbar zwischen Fliesenauflageplatte und Festspannbügel unter dem Schneidwerkzeug eingeklemmt.

Weiterhin kann der Neuerung zufolge vorgesehen sein, daß die Fliesenauflageplatte und der Festspannbügel mittig jeweils mit einer Bohrung versehen sind, deren Durchmesser größer als der Durchmesser des Schneidwerkzeugträgers sind. Durch diese Maßnahme wird die optische Beobachtung des Arbeitsablaufes erleichtert und gewährleistet, daß der Schneidwerkzeugträger ungehindert durch die Festspannvorrichtung geführt werden kann.

Zum Festspannen der Grundplatte an dem Bohrständer kann neuerungsgemäß vorgesehen sein, daß in der Mitte der Grundplatte eine Bohrung für die Festspannschraube vorgesehen ist. Da die Fußplatten der Bohrständer üblicherweise mit einem Mittelloch versehen sind, wird die Grundplatte mit einer Schraube, die durch dieses Loch geführt wird, festgespannt. Alternativ kann in Ausgestaltung der Neuerung vorgesehen sein, daß in der Grundplatte gleichmäßig auf einen Kreis verteilt acht Durchgangslöcher vorgesehen sind, von denen jeweils zwei diametral gegenüberliegende Löcher auf Parallelen zu den Grundplattenseiten liegen. Die Fußplatten der Bohrständer sind mit Langlöchern versehen, die rechtwinklig zueinander angeordnet sind und deren Mittelachsen sich im Mittelpunkt der Fußplatte schneiden. Je nach Bohrständertyp sind die Langlöcher parallel zu den Seiten der Fußplatte oder auf den Diagonalen der Fußplatte angeordnet. Um die Fliesenfestspannvorrichtung an allen vorkommenden Bohrständertypen anbringen zu können, ist die Grundplatte mit dem Lochbild aus den acht, auf einem Kreis verteilten Löcher und einem Loch im Zentrum versehen.

Gemäß einer speziellen Ausführungsform der Neuerung kann vorgesehen sein, daß die Fliesenauflageplatte und die Grundplatte einstückig, beispielsweise aus Kunststoff ausgebildet sind. Dabei ist das in der Fliesenauflageplatte vorgesehene Loch nur so tief ausgebildet, daß an der Unterseite der Grundplatte das vorerwähnte Lochbild vorgesehen werden kann.

Schließlich kann der Neuerung zufolge vorgesehen sein, daß der Zentrierstift ein auswechselbar am Schneidwerkzeugträger befestigter Bohrer ist. Dieser Bohrer gibt dem Schneidwerkzeug eine Führung, die das Herausschneiden einer exakt kreisrunden Fläche aus einer Fliese ermöglicht.

Die Neuerung wird im folgenden anhand eines in der Zeichnung dargestellten Ausführungsbeispieles näher beschrieben. In der Zeichnung zeigen :

Fig. 1 in Verbindung mit einer an einem Bohrständer eingespannten Bohrmaschine ein Werkzeug zum Lochen von Fliesen gemäß der Neuerung in Vorderansicht,

Fig. 2 die Fliesenfestspannvorrichtung des Werkzeugs nach Fig. 1 in perspektivischer Explosivdarstellung und

Fig. 3 den Schneidwerkzeugträger nach Fig. 1 in perspektivischer Darstellung.

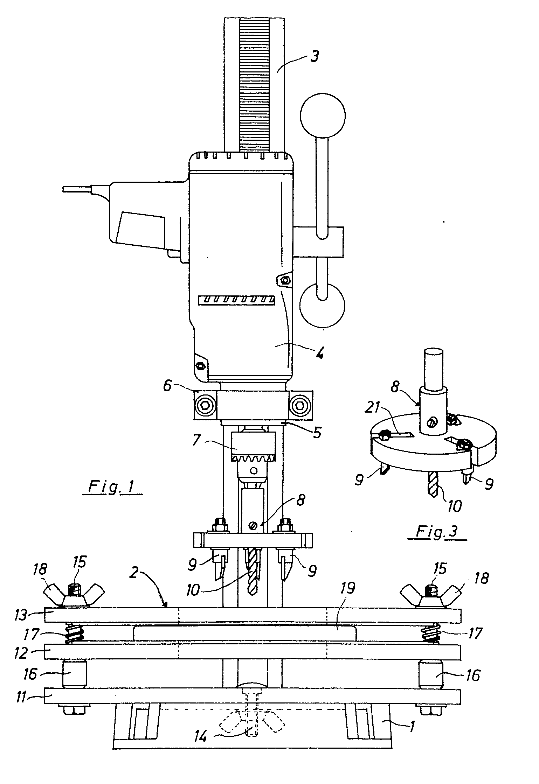

Fig. 1 zeigt einen Bohrständer, an dessen Fuß 1 die Fliesenfestspannvorrichtung 2 und an dessen Säule 3 eine elektrische Handbohrmaschine 4 festgespannt sind. Die Bohrmaschine 4 ist mit ihrem Hals 5 in dem Bohrmaschinenhalter 6 eingespannt. Im Bohrfutter 7 der Bohrmaschine 4 ist ein Schneidwerkzeugträger 8 eingespannt, an dessen Unterseite drei Schneidstähle 9 abragen. In Verlängerung der Antriebsachse der Bohrmaschine weist der Schneidwerkzeugträger einen als auswechselbaren Bohrer 10 ausgebildeten Zentrierstift auf.

Die Fliesenfestspannvorrichtung 2 setzt sich zusammen aus einer Grundplatte 11, einer Fliesenauflageplatte 12 und einem Festspannbügel 13. Die Grundplatte 11 ist in ihrem Zentrum mit einer Schraube 14 an dem Fuß 1 des Bohrständers festgeschraubt. Von der Grundplatte 11 ragen Schrauben 15 nach oben, die nahe der seitlichen Ränder der Grundplatte 11 angeordnet sind. Auf die Schrauben 15 sind Distanzstücke 16 aufgesteckt, die die ebenfalls auf die Schrauben 15 aufgesteckte Fliesenauflageplatte 12 von der Grundplatte 11 distanzieren. Oberhalb der Auflageplatte 12 sind Schraubenfedern 17 vorgesehen, die den von den Schrauben 15 durchsetzten Festspannbügel 13 von der Festspannplatte 12 abheben. Auf die Schrauben 15 aufgeschraubte Flügelmuttern 18 gewährleisten zum einen den Zusammenhalt der drei Festspannteile 11, 12, 13, zum anderen wird durch sie der Festspannbügel 13 gegen eine auf der Fliesenauflageplatte 12 aufliegenden Fliese 19 gedrückt.

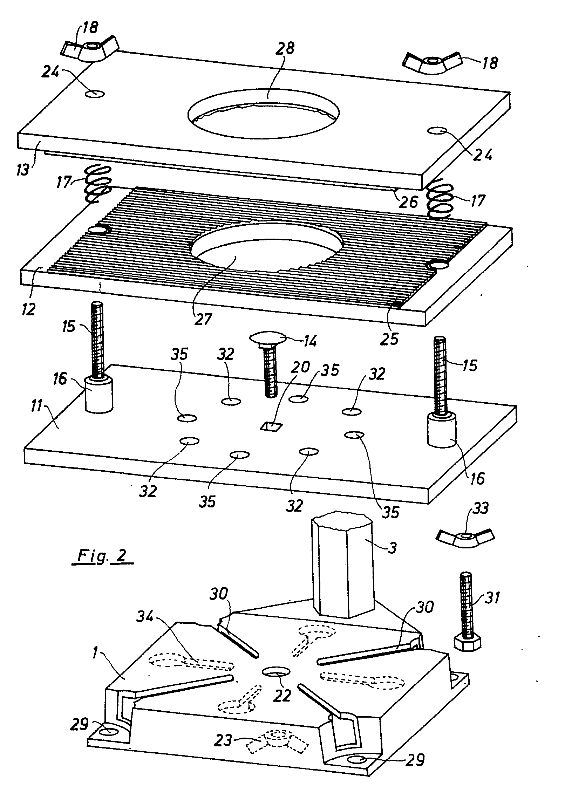

Fig. 2 zeigt in perspektivischer Explosivdarstellung die Fliesenfestspannvorrichtung 2 und den Fuß 1 des Bohrständers. Die Grundplatte 11, die Fliesenauflageplatte 12 und der Festspannbügel 13 sind rechteckig und in den Ausmaßen identisch ausgebildet. Wenn die Grundplatte 11 auf dem Fuß 1 des Bohrständers aufliegt, stehen die die Schrauben 15 tragenden Schmalenden seitlich über den Fuß 1 des Bohrständers vor. Die Grundplatte 11 ist mittig mit einem durchgehenden im Querschnitt viereckigen Loch 20 ausgebildet, in das die mit einem viereckigen Hals und einem linsenförmigen Kopf versehene Schraube 14 gesteckt wird. Das aus der Grundplatte hervorragende Ende der Schraube 14 wird durch die Mittelbohrung 22 des Bohrständerfußes 1 gesteckt und von unten durch die Flügelmutter 23 festgeschraubt. Auf die noch oben abragenden Schrauben 15 werden nacheinander die Distanzstücke 16, die Fliesenauflageplatte 12, die Schraubenfedern 17 und der mit Durchgangsbohrungen 24 versehene Fliesenfestspannbügel 13 aufgesteckt und durch die Flügelmuttern 18 festgezogen. Die Fliesenauflageplatte ist an ihrer Oberseite mit einer gerippten Auflage 25 aus Gummi versehen. Eine entsprechende Auflage 26 ist an der Unterseite des Fliesenfestspannbügels angebracht. Die Fliesenauflageplatte 12 ist mittig mit einer Bohrung 27 versehen, deren Durchmesser größer ist als der Durchmesser des Schneidwerkzeugträgers 8. Ebenso ist der Festspannbügel 13 mit einer Bohrung 28 von gleichem Durchmesser versehen.

Die an dem Schneidwerkzeugträger 8 vorgesehenen Schneidstähle 9 können in radial gerichteten Schlitzen 21 stufenlos verstellt werden. Dadurch ist es möglich, die Variationsbreite der Lochdurchmesser groß zu halten.

Um die Fliesenfestspannvorrichtung auch an einem Bohrständerfuß festspannen zu können, der kein Mittelloch 22 aufweist oder der mittels seiner Löcher 29 an einer Werkbank befestigt ist, werden die diagonal verlaufenden Langlöcher 30 zu Hilfe genommen, die zur Befestigung beispielsweise eines Schraubstockes an dem Bohrständerfuß 1 vorgesehen sind. Dazu werden Schrauben 31 mit ihrem Kopf von der Seite her in die Langlöcher 30 eingeführt. Auf die nach oben gerichteten Schrauben 31 wird dann die Grundplatte 11 mittels der Löcher 32 aufgesteckt. Durch die Flügelmuttern 33 wird die Grundplatte auf den Schrauben 31 festgezogen. Sollte der Fuß eines Bohrständers anstelle der diagonalen Langlöcher 30 parallel zu den Fußseiten verlaufende Langlöcher 34 aufweisen, werden die Schrauben 31 in diese Langlöcher eingeführt und die Grundplatte 11 mit den dafür vorgesehenen Löcher 35 auf dem Fuß des Bohrständers festgespannt.

**Ansprüche**

1. Werkzeug zum Lochen von Fliesen oder dgl., gekennzeichnet durch einen im Bohrfutter (7) einer elektrischen Handbohrmaschine (4) einspannbaren Schneidwerkzeugträger (8) mit Zentrierspitze (10) und durch eine am Fuß (1) eines Heimwerkerbohrständers festspannbare Grundplatte (11) mit einer durch Abstandhalter (16) distanzierten Fliesenauflageplatte (12) und mit einem über die Auflageplatte (12) sich erstreckenden Fliesenfestspannbügel (13).

2. Werkzeug nach Anspruch 1, dadurch gekennzeichnet, daß die Grundplatte (11) rechteckig ausgebildet ist, daß sie den Fuß (1) des Bohrständers seitlich überragt und daß nahe den seitlichen Grundplatterändern je eine Schraube (15) von der Grundplatte (11) nach oben abragt.

3. Werkzeug nach den Ansprüchen 1 und 2, dadurch gekennzeichnet, daß sich die Schrauben (15) durch die Fliesenauflageplatte (12) erstrecken und daß zwischen Grundplatte (11) und Fliesenauflageplatte (12) zylindrische, von den Schrauben (15) durchsetzte Distanzstücke (16) vorgesehen sind.

4. Werkzeug nach den Ansprüchen 1 bis 3, dadurch gekennzeichnet, daß der Festspannbügel (13) in den Randbereichen seiner Schmalseiten Durchgangslöcher (24) für die Schrauben (15) aufweist, und daß zwischen Fliesenauflageplatte (12) und Festspannbügel (13) Schraubenfedern (17) vorgesehen sind.

5. Werkzeug nach den Ansprüchen 1 bis 4, dadurch gekennzeichnet, daß die Fliesenauflageplatte (12) an der Oberseite und der Festspannbügel (13) an der Unterseite mit elastischen Auflagen (25, 26), beispielsweise aus geripptem Gummi, versehen sind.

6. Werkzeug nach den Ansprüchen 1 bis 5, dadurch gekennzeichnet, daß die Fliesenauflageplatte (12) und der Festspannbügel (13) mit jeweils einer Bohrung (27, 28) versehen sind, deren Durchmesser größer als der Durchmesser des Schneidwerkzeugträgers (8) sind.

7. Werkzeug nach den Ansprüchen 1 bis 6, dadurch gekennzeichnet, daß in der Mitte der Grundplatte eine Bohrung (20) für die Festspannschraube (21) vorgesehen ist.

8. Werkzeug nach den Ansprüchen 1 bis 7, dadurch gekennzeichnet, daß in der Grundplatte (11) gleichmäßig auf einem Kreis verteilt acht Durchgangslöcher (32, 35) vorgesehen sind, von denen jeweils zwei diametral gegenüberliegende (35) auf Parallelen zu den Grundplattenseiten liegen.

9. Werkzeug nach einem oder mehreren der Ansprüche 1 bis 8, dadurch gekennzeichnet, daß die Fliesenauflageplatte (12) und die Grundplatte (11) einstückig, beispielsweise aus Kunststoff, ausgebildet sind.

10. Werkzeug nach Anspruch 1, dadurch gekennzeichnet, daß der Zentrierstift (10) ein auswechselbar am Schneidwerkzeugträger (8) befestigter Bohrer ist.

## Claims

1. A tool for perforating fleeces or the like, characterised by a cutting-tool carrier (8) with a centre point (10), which can be chucked in the drill chuck (7) of an electrical hand drill (4) and by a base plate (11) which can be clamped at the foot (1) of an amateur's drill stand, with a fleece supporting plate (12) spaced apart by spacers (16) and with a fleece clamping yoke (13) extending over the supporting plate (12).

2. A tool as claimed in Claim 1, characterised in that the base plate (11) is made rectangular, that it projects laterally beyond the foot (1) of the drill stand ant that a screw (15) projects upwards from the base plate (11) near each of the lateral edges of the base plate.

3. A tool as claimed in Claims 1 and 2, characterised in that the screws (15) extend through the fleece supporting plate (12) and that cylindrical spacing members (16), traversed by the screws (15), are provided between the base plate (11) and the fleece supporting plate (12).

4. A tool as claimed in Claims 1 to 3, characterised in that the clamping yoke (13) comprises through holes (24) for the screws (15) in the marginal regions of its narrow sides, and that helical springs (17) are provided between the fleece supporting plate (12) and the clamping yoke (13).

5. A tool as claimed in Claims 1 to 4, characterised in that the fleece supporting plate (12) is provided at the top and the clamping yoke (13) is provided at the bottom with resilient supports (25, 26), for example of ribbed rubber.

6. A tool as claimed in Claims 1 to 5, characterised in that the fleece supporting plate (12) and the clamping yoke (13) are each provided with a bore (27, 28), the diameters of which are larger than the diameter of the cutting-tool carrier (8).

7. A tool as claimed in Claims 1 to 6, characterised in that a bore (20) for the clamping screw (21) is provided in the middle of the base plate.

8. A tool as claimed in Claims 1 to 7, characterised in that eight through holes (32, 35) uniformly distributed in a circle are provided in the base plate (11) of which two at a time are situated diametrically opposite one another (35) on parallels to the sides of the base plate.

9. A tool as claimed in one or more of the Claims 1 to 8, characterised in that the fleece supporting plate (12) and the base plate (11) are made in one piece, for example of plastics material.

10. A tool as claimed in Claim 1, characterised in that the centring pin (10) is a drill which is interchangeably secured to the cutting-tool carrier (8).

## Revendications

1. Outil pour le perçage des carreaux et des objets semblables, caractérisé par le fait qu'il comporte un porte-outil (8) qui porte une pointe de centrage (10) et peut être dans le mandrin (7) d'une perceuse électrique (4) et une plaque de base (11) qui porte une plaque porte-carreau (12) tenue à distance d'elle par des entretoises (16) et une bride de serrage (13) s'étendant au-dessus de la plaque porte-carreau (12) et qui peut être fixée au socle (1) d'un support de perçage pour amateur.

2. Outil selon la revendication 1, dans lequel la plaque de base (11) est rectangulaire et dépasse latéralement du socle (1) du support de perçage et comporte près de chacun de ses deux bords latéraux, une vis (15) s'étendant vers le haut.

3. Outil selon des revendications 1 et 2, dans lequel les vis (15) traversent la plaque porte-carreau (12) et entre la plaque de base (11) et la plaque porte-carreau (12) sont prévues des entretoises cylindriques (16) traversées par les vis (15).

4. Outil selon des revendications 1 à 3, dans lequel la bride de serrage (13) présente près du bord de ses petits côtés des trous débouchants (24) destinés à recevoir les vis (15) et entre la plaque porte-carreau (12) et la bride de serrage (13) sont prévus des ressorts hélicoïdaux (17).

5. Outil selon des revendications 1 à 4, dans lequel la plaque porte-carreau (12) et la bride de serrage (13) sont pourvues, la première sur le dessus et la seconde sur le dessous, d'appuis élastiques (25, 26) par exemple en caoutchouc nervuré.

6. Outil selon des revendications 1 à 5, dans lequel la plaque porte-carreau (12) et la bride de serrage (13) sont pourvues chacune d'un trou (27, 28) de diamètre supérieur au diamètre du porte-outil (8).

7. Outil selon des revendications 1 à 6, dans lequel au milieu de la plaque de base est fait un trou (20) destiné à recevoir une vis de fixation (14).

8. Outil selon des revendications 1 à 7, dans lequel sont faits, dans la plaque de base (11), huit trous débouchants (32, 35) régulièrement répartis sur un cercle dont deux diamétralement opposés (35) sont sur une droite parallèle à un côté de la plaque de base et deux autres également diamétralement opposés (35) sont sur une droite parallèle à l'autre côté de la plaque de base.

9. Outil selon une ou plusieurs des revendications 1 à 8, dans lequel la plaque porte-carreau (12) et la plaque de base (11) sont d'une seule pièce par exemple en plastique.

10. Outil selon la revendication 1, dans lequel la pointe de centrage (10) est un foret fixé de façon amovible au porte-outil (8).

1/2

Fig. 1

Fig. 3

2/2

Fig. 2